**Europäisches Patentamt**

**European Patent Office**

**Office européen des brevets**

(11) Veröffentlichungsnummer: **0 382 941**

**A2**

## (12) EUROPÄISCHE PATENTANMELDUNG

(21) Anmeldenummer: 89123849.5

(22) Anmeldetag: 22.12.89

(51) Int. Cl.5: **B23B 23/00**

(30) Priorität: **15.02.89 DE 3904568**

(43) Veröffentlichungstag der Anmeldung:
**22.08.90 Patentblatt 90/34**

(84) Benannte Vertragsstaaten:
**CH DE FR GB IT LI SE**

(71) Anmelder: **Boehringer Werkzeugmaschinen GmbH**
**Stuttgarter Strasse 50 Postfach 220**
**D-7320 Göppingen(DE)**

(72) Erfinder: **Kuhn, Siegfried, Ing.-Grad.**
**Gammelshauserstrasse 8**
**D-7321 Dürnau(DE)**
Erfinder: **Mühlich, Werner**
**Gneisenaustrasse 1**
**D-7334 Süssen(DE)**

Erfinder: **Räder, Robert**
**St.-Galler-Strasse 17**
**D-7320 Göppingen(DE)**
Erfinder: **Ritz, Otmar, Dipl.-Ing.**
**Hauptstrasse 121**
**D-7321 Wangen(DE)**
Erfinder: **Schulten, Hermann**
**Brückenstrasse 46**
**D-7321 Birenbach(DE)**
Erfinder: **Unruh, Manfred, Dipl.-Ing.**
**Hohenstaufenstrasse 52**
**D-7320 Göppingen(DE)**

(74) Vertreter: **Hansmann, Axel et al**
**Patentanwälte HANSMANN & VOGESER**
**Albert-Rosshaupter-Strasse 65**
**D-8000 München 70(DE)**

(54) **Spannmittel.**

(57) Die Erfindung betrifft einen Reitstock für Drehmaschinen, dessen Spannkraft über einen weiten Bereich mit vielen Zwischenschritten exakt einstellbar ist, um den Reitstock hierdurch besonders für den autoamtischen Einsatz vorteilhaft auszubilden. Dabei wirken auf die Pinoleneinheit eine Reihe von parallel angeordneten Kolben unterschiedlicher Querschnittsfläche ein, die einzeln oder in Kombination mit einem gemeinsamen Arbeitsdruck beaufschlagt werden. Die Pinoleneinheit ist jedoch nur über einen geringen axialen Weg innerhalb des Grundkörpers verfahrbar und befindet sich in der Ruhelage federbeaufschlagt immer in der am breitesten vorgeschobenen Postion. Zum Spannen eines Werkstückes wird der Reitstock soweit gegen das Werkstück vorgefahren, bis die gesamte Pinoleneinheit etwas in den Grundkörper des Reitstockes zurückgedrückt wird, wodurch über Endschalter eim Abbremsen und Festsetzen des Reitstockes sowie ein Beaufschlagen der Hydraulikzylinder erfolgt, die die Pinoleneinheit unter eine vorgewählte Spannkraft setzen.

Die Erfindung betrifft linear wirkende Spannmittel an Werkzeugmaschinen, insbesondere Reitstöke an Drehmaschinen.

Üblicherweise ist ein Reitstock auf einer Drehmaschine entlang geeigneter Führungen in Z-Richtung auf das Werkstück zu bzw. von diesem weg verfahrbar. Soll nun ein Werkstück zwischen Spitzen gespannt werden, so wird der Reitstock bis nahe an das Werkstück heran verfahren, auf dem Bett der Drehmaschine festgeklemmt und die Pinole mit dem eingesetzten Spannteil, meist einer Zentrierspitze, aus dem Grundkörper des Reitstokkes heraus gegen das zu spannende Werkstück gepreßt. Die aufzubringende Spannkraft wird dabei beispielsweise durch im Grundkörper des Reitstokkes angeordnete Hydraulikzylinder erzeugt. Wenn die Spannkraft variabel sein muß, um an die Belastbarkeit unterschiedlicher Werkstücke angepaßt zu werden, so wird dies durch Einbau eines Druckregelventiles in der Zuführung zum eingesetzten Hydraulikzylinder im Reitstock gelöst.

Derartige Druckregelventile lassen jedoch immer gewisse Druckschwankungen zu, insbesondere mit zunehmender Lebensdauer, und sind darüber hinaus störanfälliger als einfache Zweiwegeventile die lediglich eine geöffnete und eine geschlossene Stellung einnehmen können. Mit zunehmender Automatisierung der Drehmaschinen, sollte jedoch die Spannkraft der Reitstockspitze automatisch und dennoch exakt einstellbar sein, ohne die Unzuverlässigkeit und den Kostenaufwand von Servo- bzw. Proportionaldruck-Regelventilen in Kauf nehmen zu müssen.

Ein weiterer Nachteil liegt darin, daß bei der beschriebenen Vorgehensweise die Einsatzstellung des Grundkörpers des Reitstockes auf dem Maschinenbett vorgegeben sein muß, um vor dem Ausfahren der Pinole keine Berührung mit dem Werkstück zu haben, da bereits hierdurch größere Anpreßdrücke als die gewünschte spätere Spannkraft auftreten könnten und damit Beschädigungen oder Zerstörung des Werkstückes.

Es ist daher Ziel der vorliegenden Erfindung, den gesamten Reitstock weitestgehend an die Erfordernisse eines automatischen Betriebes anzupassen, insbesondere auf die Angabe einer Sollposition des Grundkörpers des Reitstockes zu verzichten und unterschiedliche Spannkräfte mit geringem Aufwand präzise einstellen zu können.

Obwohl die im folgenden beschriebene Konfiguration für jedes linear wirkende Spannmittel anwendbar ist, soll sie der besseren Übersichtlichkeit halber weiter am Beispiel eines Reitstockes dargelegt werden.

Das genannte Ziel wird dadurch erreicht, daß die Pinole samt eventuell eingesetzter Zentrierspitze oder anderem Spannteil nur eine geringe Stärke bezüglich des Grundkörpers des Reitstockes in oder gegen Spannrichtung erforderlich ist. Im Ausgangszustand, wenn also keine Kraft auf die Zentrierspitze bzw. die Pinole entgegen der Spannrichtung wirkt, wird die Pinole selbst bzw. die mit ihr in axialer Richtung fest verbundenen Teile durch Federkraft in Spannrichtung gegen einen Anschlag im Inneren des Grundkörpers des Reitstockes nach vorne gepreßt. Nach hinten stützt sich diese Feder entweder am Grundkörper des Reitstockes oder an einer dazwischen angeordneten Preßplatte ab. Hinter dieser Preßplatte befindet sich ein wiederum am Grundkörper abgestütztes Bauteil, welches mehrere nach vorne, zur Preßplatte hin offene Bohrungen aufweist, in denen Hydraulikkolben laufen. Bei Beaufschlagen eines oder mehrer dieser Kolben mit dem Arbeitsdruck schieben sich diese Kolben nach vorne aus ihren Bohrungen heraus und drücken damit die Preßplatte nach vorne und nach Anlegen an der Pinole bzw. einem mit diesem in axialer Richtung fest verbundenen Teil wird auch die Pinole und damit das Spannteil selbst nach vorne bewegt. Um ein Verkanten der Preßplatte zu verhindern, weist diese nach hinten einen hohlzylindrischen Fortsatz auf, in dem das dahinter befindliche, die Hydraulikkolben aufnehmende Bauteil mit entsprechend angepaßter Aussenkontur geführt wird. Da die auf die Preßplatte einwirkenden Hydraulikkolben unterschiedliche Querschnittsfläche aufweisen, können diese Hydraulikkolben alle mit dem gleichen Arbeitsdruck unter Zwischenschaltung einfacher Zweiwegeventile, die lediglich eine geöffnete und eine geschlossene Stellung kennen, versorgt werden, um dennoch durch Ansteuerung einzelner oder in Kombination mehrerer Hydraulikkolben unterschiedliche Spanndrücke aufzubringen. Besonders vorteilhaft erscheint es, die Hydraulikkolben so zu dimensionieren, daß jeder Hydraulikkolben, Versorgung mit gleichem Arbeitsdruck vorausgesetzt, eine doppelt so hohe Preßkraft erzeugt, wie der nächst schwächere Hydraulikkolben.

Beispielsweise würde bei Einsatz von fünf Hydraulikkolben, die für einzelne Druckkräfte von 500N, 1000N, 2000N, 4000N, 8000N ausgelegt sind, der Bereich von 0 bis 15.500N in Schritten von 500N, also durch 32 verschiedene Spannkräfte, abgedeckt.

Diese Ausgestaltung ist wegen der Versorgung mit nur einem einzigen Arbeitsdruck und die Ausstattung mit einfachen und zuverlässig arbeitenden sowie verschleißarmen Zweiwegeventilen wenig störanfällig und hält die gewählten Spannkräfte exakt ein. Darüber hinaus sind die Kosten einer solchen Ausführung geringer als bei Einsatz von Proportionaldruck-Regelventilen und ähnlichen Hydraulikeinheiten.

Der geringe Verschiebeweg der Pinole kommt dadurch zustande, daß diese ja in der Ausgangslage immer durch Federkraft nach vorne gegen einen Anschlag des Grundkörpers gepreßt ist, sich also in der Ausgangslage bereits in der am weitesten aus dem Grundkörper vorgeschobenen Position befindet. Von hier aus kann sie lediglich bis zur Anlage an der Preßplatte zurückgedrückt werden, so daß im Gegenzug bei Einwirken der Hydraulikkolben auf die Preßplatte diese die Pinole bzw. mit ihr in Axialrichtung fest verbundene Teile maximal bis zum Anschlag des Grundkörpers vorschieben kann. Dies bietet den Vorteil, daß aufgrund des geringen Verschiebeweges eine bessere radiale Führung und damit Zentrierung der Pinole im Grundkörper des Reitstockes möglich ist, und wegen der sehr geringen Auskragung der Zentrierspitze aus dem Reitstock auch eine gute Zentrierung des Werkstückes gewährleistet ist.

Der geringe Verschiebeweg der Pinole ist deshalb ausreichend, weil der gesamte Reitstock beim Heranfahren an das Werkstück nicht vor der Berührung mit dem Werkstück angehalten wird, sondern bereits in dieser Phase der Kontakt mit dem Werkstück gewünscht ist. Dadurch wird die Pinoleneinheit, also Pinole sowie in axialer Richtung mit ihr fest verbundene Teile, entgegen der Federkraft vom Anschlag im Grundkörper nach hinten abgedrückt. Durch diese Bewegung wird ein Endschalter betätigt, der bewirkt, daß die Vorwärtsbewegung des Reitstockes beendet und dieser auf dem Bett der Drehmaschine festgesetzt wird. Die Pinoleneinheit befindet sich in dieser Phase nicht mehr in Anlage am Anschlag im Grundkörper des Reitstockes, sondern entweder zwischen diesem Anschlag und der Anlage an der Preßplatte oder in Anlage an der Preßplatte. Die Betätigung des Endschalters bewirkt ferner ein Aktivieren eines oder mehrerer der Hydraulikkolben, die die Pr eßplatte und damit die gesamte Pinoleneinheit wieder nach vorne in Richtung auf den Anschlag zuschieben. Da die Pinole bzw. die in sie eingesetzte Zentrierspitze bereits am Werkstück anliegen, ergibt sich jedoch nur eine geringfügige Bewegung in Spannrichtung bis die von den Hydraulikkolben bzw. der gesamten Preßplatte aufgebrachte Spannkraft am Werkstück anliegt. Eine Anlage der Pinoleneinheit am Anschlag des Grundkörpers darf dabei selbstverständlich nicht erreicht werden. Ebenso muß die Kraft der Feder, die die Pinoleneinheit gegenüber beispielsweise der Preßplatte abstützen, geringer sein, als die Kraft des schwächsten der Hydraulikkolben, die auf die Preßplatte in Gegenrichtung einwirken.

Damit kann bei automatischer Spannung eines Werkstückes mittels einer im Reitstock gelagerten Zentrierspitze der gesamte Reitstock ohne Vorgabe einer Sollposition bis zur Berührung an das Werkstück herangefahren werden, worauf über die Endschalterbetätigung automatisch ein Abbremsen der Vorwärtsbewegung bis zum Stillstand sowie ein Festsetzen des Reitstockes auf dem Bett der Drehmaschine erfolgt, sowie das daran anschließende Unterdrucksetzen der Pinoleneinheit über die Hydraulikzylinder.

Da die gesamte Pinoleneinheit nur einen geringen Verfahrweg in Längsrichtung bewältigen können muß, kann auch eine entsprechend günstige Lagerung der mit dem Werkstück mitdrehenden Pinole im Grundkörper des Reitstockes gewählt werden.

Da die Pinole nur einen sehr geringen Verschiebeweg innerhalb des Grundkörpers vollziehen können muß, kann auch die Lagerung der samt Zentrierspitze mit dem Werkstück mitdehenden Pinole im Grundkörper anders ausgestaltet werden: Im vorderen Bereich ist die Pinole über wenigstens zwei Radialrollenlager gegenüber dem Grundkörper abgestützt, wobei diese Rollenlager so ausgebildet sind, daß sich die Wälzkörper auf ihrem Aussenring in axialer Richtung verschieben können, entsprechend der axialen Bewegungsmöglichkeit der Pinole. Im hinteren Bereich stützt sich die Pinole dagegen mittels Schulterkugellagern gegenüber der nicht-drehenden Buchse ab.

Eine besonders vorteilhafte Ausführungsform gemäß der Erfindung ist im folgenden anhand der Figuren beispielhaft näher beschrieben. Es zeigen:

Fig. 1 eine in der Längsachse der Pinole aufgeschnittene Draufsicht auf einen erfindungsgemäßen Reitstock,

Fig. 2 eine Draufsicht auf die über der Schnittebene der Fig. 1 liegende Endschalteransteuerung und

Fig. 3 eine Schnittdarstellung entlang der Linie A-A der Fig. 1.

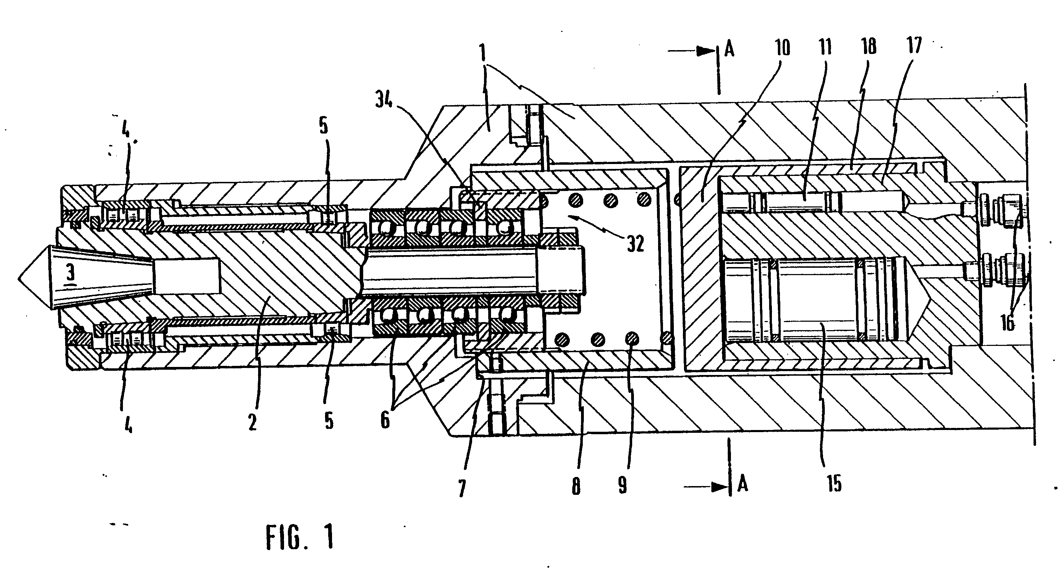

Fig. 1 zeigt einen Längsschnitt durch einen erfindungsgemäßen Reitstock mit dem Grundkörper 1 entlang der Längsachse der Pinole 2. Dabei sind im vorderen Teil der Darstellung die Führungen 33 zu sehen, entlang deren der gesamte Reitstock auf dem Bett der Drehmaschine verfahrbar ist. Bei dem gewünschten automatischen Betrieb wird deshalb der gesamte Reitstock auf diesen Führungen 33 an das Werkstück herangefahren, bis die in der Pinole 2 sitzende Zentrierspitze 3 das nicht dargestellte Werkstück berührt und durch dieses in den Grundkörper 1 hineingeschoben wird. Die Pinole 2 ist im vorderen Teil des Grundkörpers 1 in den beiden Rollenlagern 4 und 5 gelagert. Dabei handelt es sich um solche Rollenlager, bei denen die Wälzkörper durch den Innenring eine axiale Führung erfahren, dagegen auf dem Aussenring des Lagers in axialer Richtung verschiebbar sind. Im hinteren Bereich ist die Pinole 2 über Schulterkugellager 6 gegenüber der nicht drehenden Buchse 8 gelagert. Die in O-Anordnung eingebauten Schulterkugellager sind mit ihrem Innenring axial und radial fest mit der Pinole 2 verbunden und geben axiale Bewegungen der Pinole 2 auch an die Buchse 8 weiter, da ein mit der Buchse 8 axial fest verbundener Vorsprung 34 zwischen die Aussenringe der in O-Anordnung angestellten Schulterkugellager 6 hineinragt.

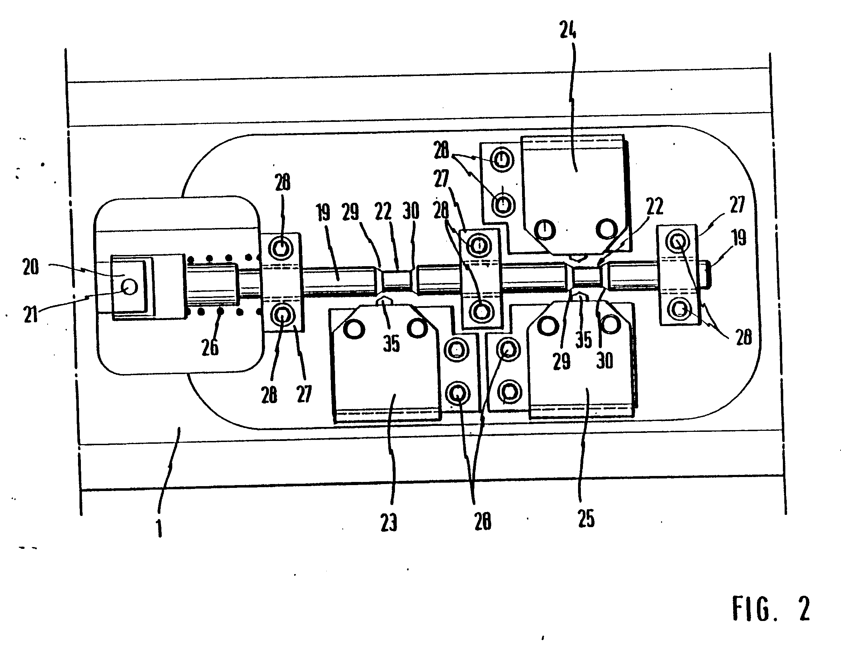

Die Buchse 8 und somit die gesamte mit der Pinole 2 axial fest, jedoch nicht mitdrehend ausgebildete Pinoleneinheit 32 wird im Ausgangszustand durch die Kraft einer Druckfeder 9 nach vorne gegen einen stirnseitigen Anschlag 7 des Grundkörpers 1 gepreßt. Wird die Zentrierspitze 3 samt der Pinole 2 und der Pinoleneinheit 32 durch das Heranfahren an das nicht dargestellte Werkstück in den Grundkörper 1 hineingeschoben, also gemäß der Fig. 1 nach rechts bewegt, so hebt die Buchse 8 vom Anschlag 7 des Grundkörpers 1 ab und bewegt über eine mit der Buchse 8 in axialer Richtung fest verbundene Betätigungsstange 20 auch eine Betätigungsstange 19 nach rechts, die in Fig. 2 dargestellt ist, und sich im Grundkörper 1 oberhalb der Schnittebene der Fig. 1 befindet. Obwohl die Betätigungsstange 20 über einen Bolzen 21 mit der Buchse 8 in axialer Richtung fest verbunden ist, wird sie ebenfalls über eine Druckfeder 26 im unbelasteten Zustand in Richtung auf das vordere Ende des Reitstockes, also die linke Seite der Fig. 2, gedrückt. Die Druckfeder 26 stützt sich dabei auf der linken Seite an einer Schulter der Betätigungsstange 19 ab und auf der rechten Seite auf einem der Lagerböcke 27, mittels denen die Betätigungsstange 19 in axialer Richtung geführt wird. Diese Lagerböcke 27 sind mit jeweils zwei Schrauben 28 am Grundkörper 1 des Reitstockes befestigt. Die Befestigungsstange 19 hat einen runden Querschnitt und weist wenigstens zwei verjüngte Abschnitte 22 auf. Im Ablauf von links nach rechts der Fig. 2 gesehen, bildet dabei die Schulter 29 den Übergang vom normalen Durchmesser der Betätigungsstange 19 zum verjüngten Abschnitt 22, welcher am nun folgenden Übergang zum normalen Durchmesser der Betätigungsstange 19 eine Gegenschulter 30 aufweist. Analoges gilt für einen weiteren verjüngten Abschnitt im weiteren Verlauf der Betätigungsstange 19. Neben der Betätigungsstange 19 sind nun Endschalter 23 bis 25 so angebracht, daß deren Taster 35 quer zur Längsachse der Betätigungsstange 19 im Bereich der verjüngten Abschnitte 22 auf die Betätigungsstange 19 zu ragen. Sie berühren dabei die Betätigungsstange 19 nicht, reichen jedoch näher an diese heran, als es dem Durchmesser der Betätigungsstange 19 in den nicht verjüngten Bereichen entspricht. Dadurch werden die Taster 35 der Endschalter 23 bis 35, deren Enden abgeschrägt sind, in die Endschalter 23 bis 25 hineingedrückt und somit die Endschalter betätigt, falls die Betätigungsstange 19 in axialer Richtung soweit bewegt wird, daß die Schulter 29 die Abschrägung am Ende eines Tasters 35 erreicht und diesen Taster 35 dadurch in den entsprechenden Endschalter zurückdrängt.

Wann der jeweilige Endschalter anspricht, hängt davon ab, welcher Abstand, in axialer Richtung der Betätigungsstange 19 betrachtet, in der Normallage zwischen dem abgeschrägten Ende des entsprechenden Tasters 35 und der Schulter 29 des verjüngten Abschnittes 22 besteht.

Der bei einem Zurückschieben der Betätigungsstange 19, ausgelöst durch ein Zurückschieben der Pinoleneinheit 32, als erstes betätigte Endschalter 23 bewirkt, daß der Vorschub des gesamten Reitstockes auf das Werkstück zu abgeschaltet wird, und ggfs. ein Abbremsen dieser Vorwärtsbewegung erfolgt, und er bewirkt ferner das Festklemmen des gesamten Reitstockes auf dem Bett der Drehmaschine sowie das Vorschieben der gesamten Pinoleneinheit 32 und damit der Zentrierspitze 3 aus dem Grundkörper 1 heraus gegen das Werkstück mit einer vorher festgelegten Spannkraft.

Die bei dem besagten Zurückschieben der Betätigungsstange 19 erst nach dem Endschalter 23 ansprechenden Endschalter 24 und 25 dienen lediglich der Sicherheit: Sollten diese Endschalter 24 bzw. 25 betätigt werden, so bedeutet dies, daß nach der durch Auslösung des Endschalters 23 bewirkten Abschaltung des Antriebes des Reitstockes dieser nicht schnell genug zum Stillstand kam und eine zu große weitere Verfahrstrecke hinter sich gebracht hat. Die Endschalter 24 und 25 bewirken daher normalerweise ein abruptes Abbremsen der weiteren Bewegung des Reitstockes sowie dessen Rückwärtsbewegung, bis die Taster 35 der Endschalter 24 und 25 nicht mehr zurückgeschoben sind. Die beiden Endschalter 24 und 25 wirken von gegenüberliegenden Seiten im Bereich des zweiten, also hinteren, verjüngten Abschnittes 22, wogegen der erste Endschalter 23 im Bereich des vorderen verjüngten Abschnittes 22 neben der Betätigungsstange 19 montiert ist. Die gesamte in der Fig. 2 dargestellte Anordnung der Betätigungsstange 19 sowie der hierdurch betätigten Endschalter befindet sich im Grundkörper 1 des Reitstockes und ist im Betrieb der Maschine durch eine Abdeckung vor Verschmutzung und Beschädigung geschützt.

Das durch die Betätigung des Endschalters 23 unter anderem bewirkte Vorwärtsschieben der gesamten Pinoleneinheit 32 aus dem Grundkörper 1 heraus in Richtung auf das Werkstück erfolgt durch das Verschieben der Preßplatte 10 nach links, an der sich die Druckfeder 9 abstützt, die bestrebt ist, die Pinoleneinheit 32 nach links gegen den Anschlag 7 des Gehäuses und damit in die vorderste mögliche Position zu drücken. Diese Preßplatte 10 ist an ihrer Rückseite einstückig mit einem Zylinder 18 verbunden, der auf einem darin befindlichen Kolben 17 axial verschieblich geführt ist.

In diesem Kolben 17 befinden sich in entsprechend geformten Ausnehmungen, die in Richtung zur Preßplatte 10 hin offen sind, mehrere Hydraulikkolben 11 bis 15. Bei Beaufschlagen der hinter den Hydraulikkolben 11 bis 15 liegenden Hohlräume durch den Arbeitsdruck eines über die Hydraulikleitung 16 angelieferten Arbeitsmediums pressen einer oder mehrere dieser Hydraulikkolben 11 bis 15 die Preßplatte 10 vom Kolben 17 weg nach links. Da bereits der schwächste dieser Hydraulikkolben eine größere Kraft bewirkt, als es zum Zusammendrücken der Druckfeder 9 notwendig ist, wird hierdurch die gesamte Pinoleneinheit 32 und damit die Zentrierspitze 3 mit der Gesamtkraft der beaufschlagten Hydraulikkolben 11 bis 15 nach links gegen das Werkstück gedrückt.

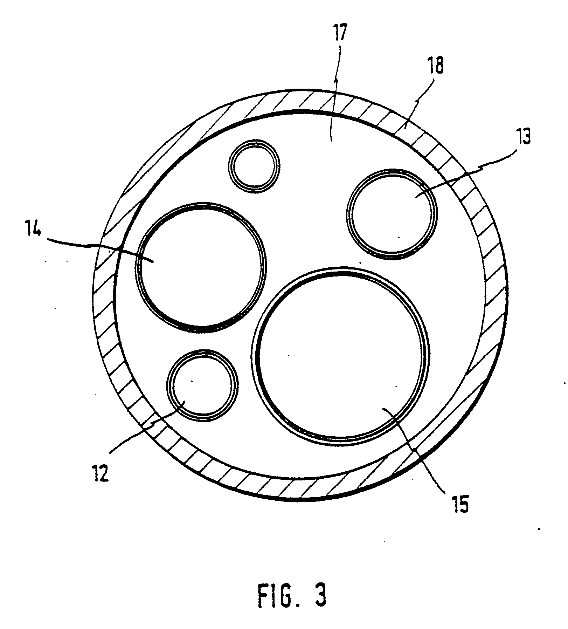

Fig. 3 zeigt eine Draufsicht auf die Stirnseite des Kolbens 17 von der Seite der Preßplatte 10 her, also eine Ansicht A-A gemäß Fig. 1. Aus dieser Fig. 3 ist ersichtlich, daß die Hydraulikkolben 11 bis 15 über die Stirnfläche des Kolbens 17 nach der optimalen geometrischen Verteilung gestreut sind und damit bei Beaufschlagung nur eines oder einzelner dieser Hydraulikkolben unter Umständen auch eine exzentrische Beaufschlagung der Preßplatte 10 gegeben sein kann. Ein Verkanten der Preßplatte 10 wird aber dadurch verhindert, daß die Aussenkontur des Kolbens 17 und die Innenkontur des Zylinders 18 paßgenau über eine große Länge ineinanderlaufen. Die Querschnittsflächen der einzelnen Hydraulikkolben 11 bis 15 sind dabei um den Faktor 2 zueinander gestuft, so daß jeder Kolben eine doppelt so große Querschnittsfläche wie der nächst kleinere Hydraulikkolben bzw. eine halb so große Querschnittsfläche wie der nächst größere Hydraulikkolben besitzt. Dadurch ist auch die Kraft, die der einzelne Hydraulikkolben entwickelt, bei Beaufschlagung mit gleichem Arbeitsdruck zwischen den einzelnen Hydraulikkolben mit dem Faktor 2 abgestuft.

Jeder der Hydraulikkolben 11 bis 15 verfügt über einen eigenen Anschluß an eine Hydraulikleitung 16, in deren Verlauf sich ein nicht dargestelltes Zweiwegeventil befindet, welches also lediglich eine geöffnete oder eine geschlossene Stellung einnehmen kann. Alle diese Hydraulikleitungen 16 sind mit einer gemeinsamen Druckquelle verbunden. Da die einzelnen, den Hydraulikkolben 11 bis 15 zugeordneten E/O-Ventile sehr leicht auch automatisch ansteuerbar sind, kann bei abgestufter Auslegung der Hydraulikkolben 11 bis 15 für 500N, 1000N, 2000N, 4000N, 8000N durch die Kombination einzelner dieser Hydraulikkolben jede gewünschte Spannkraft im Bereich von 0 bis 15.500 N in Teilschritten von 500N exakt eingestellt werden. Dennoch muß nur ein Druck-Medium eines einzigen Niveaus vorhanden sein, und es sind keinerlei Proportionaldruckventile oder ähnliches notwendig.

Der Kolben 17, in dem die Hydraulikkolben 11 bis 15 geführt sind, stützt selbst natürlich wiederum über eine Schulter nach hinten am Grundkörper 1 des Reitstockes ab.

## Ansprüche

1. Linear wirkendes Spannmittel für Werkzeugmaschinen mit
- einem bezüglich der Werkzeugmaschine in und gegen die Spannrichtung verfahrbaren Grundkörper,
- einem aus dem Grundkörper in und gegen die Spannrichtung verfahrbaren Zwischenteil, in welchem
- das eigentliche Spannteil auswechselbar fest angeordnet ist, **dadurch gekennzeichnet, daß**
- der hohle Grundkörper in seinem Inneren einen Anschlag aufweist, gegen den das Zwischenteil im Ruhezustand durch die Kraft einer Feder in Spannrichtung gedrückt wird,
- eine im Anschluß an den Anschlag im Inneren des Grundkörpers angeordnete Führung, entlang welcher das Zwischenteil bei Druck entgegen der Spannrichtung gegen die Kraft der Feder vom Anschlag nach hinten bewegt wird,
- im Grundkörper (1) wenigstens ein Endschalter (24) zum Abbremsen und Festklemmen des Spannmittels sowie Ausfahren des Zwischenteiles angeordnet sind, die durch die Rückwärtsbewegung des Zwischenteiles betätigt werden,
- eine Preßplatte (10) zum Vorwärtsschieben des Zwischenteils samt Spannteil im Grundkörper (1) in und entgegen der Spannrichtung verfahrbar ist und
- daß hinter der Preßplatte (10) mehrere unterschiedlich große Hydraulikkolben (11 bis 15) angeordnet sind, die von der Rückseite her die Preßplatte beaufschlagen können und durch einfache I/O-Ventile angesteuert werden.

2. Spannmittel nach Anspruch 1, **dadurch gekennzeichnet, daß** zusätzliche Endschalter (25) vorgesehen sind, die durch die Rückwärtsbewegung des Zwischenteiles betätigt werden und bei Vorwärtsbewegung des Spannmittels später als der Endschalter (24) ansprechen.

3. Spannmittel nach Anspruch 1 oder 2, **dadurch gekennzeichnet, daß** die Druckkolben (11 bis 15) so dimensioniert sind, daß ihre Kräfte (F) eine mathematische Reihe nach der Funktion ($F_n = F_1 \times 2^n$) erfüllen, wobei $F_1$ die Kraft des schwächsten Hydraulikkolbens ist.

4. Spannmittel nach Anspruch 3, **dadurch gekennzeichnet, daß** die Hydraulikkolben (11 bis 15) alle mit gleich hohem Arbeitsdruck versorgt werden.

5. Spannmittel nach Anspruch 3 oder 4, **dadurch gekennzeichnet**, daß die Hydraulikkolben (11 bis 15) nach Beaufschlagung mit dem Arbeitsdruck Kräfte von 500N, 1000N, 2000N, 4000N, 8000N aufbringen.

6. Linear wirkender Reitstock für Werkzeugmaschinen mit
- einem bezüglich der Werkzeugmaschine in und gegen die Spannrichtung verfahrbaren Grundkörper,
- einem aus dem Grundkörper in und gegen die Spannrichtung verfahrbaren Zwischenteil, in welchem
- die eigentliche Zentrierspitze auswechselbar fest angeordnet ist, **dadurch gekennzeichnet, daß**
- der hohle Grundkörper (1) in seinem Inneren einen Anschlag aufweist, gegen den die Pinole im Ruhezustand durch die Kraft einer Feder in Spannrichtung gedrückt wird
- eine im Anschluß an den Anschlag im Inneren des Grundkörpers (1) angeordnete Führung, entlang welcher der Pinole bei Druck entgegen der Spannrichtung gegen die Kraft der Feder vom Anschlag nach hinten bewegt wird,
- im Grundkörper (1) wenigstens ein Endschalter (24), zum Abbremsen und Festklemmen des Reitstockes sowie Ausfahren der Pinole angeordnet sind, die durch die Rückwärtsbewegung der Pinole betätigt werden,
- eine Preßplatte (10) zum Vorwärtsschieben der Pinole samt Zentrierspitze im Grundkörper (1) in und entgegen der Spannrichtung verfahrbar ist und
- daß hinter der Preßplatte (10) mehrere unterschiedlich große Hydraulikkolben (11 bis 15) angeordnet sind, die von der Rückseite her die Preßplatte beaufschlagen können und durch einfache I/O-Ventile angesteuert werden.

7. Verfahren zum reitstockseitigen Spannen eines Werkstückes in einer Drehmaschine durch Beaufschlagen des Werkstückes mit einer Kraft in Z-Richtung, **gekennzeichnet** durch folgende Schritte
- Heranfahren des Reitstockes, bis Pinole (2) und Spannteil durch das Werkstück eine vorgegebene Strecke in den Grundkörper (1) zurückgeschoben und hierdurch ein Endschalter (24) betätigt ist, der das weitere Heranfahren des Reitstockes beendet, das hydraulische Festspannen des Reitstockes auf dem Bett der Drehmaschine sowie das Beaufschlagen eines oder mehrerer Hydraulikzylinder (11 bis 15) bewirkt, die auf eine gemeinsame Preßplatte (10) einwirken, welche die Pinole (2) mit dem gewünschten Gesamtanpreßdruck nach vorne in das Werkstück preßt.

FIG. 1

EP 0 382 941 A2

FIG. 2

FIG. 3